# EUROPEAN PATENT SPECIFICATION

(11) **EP 0 488 975 B1**
(45) Date of publication and mention of the grant of the patent: **15.03.1995**
(21) Application number: 91850278.2
(22) Date of filing: 13.11.1991
(51) Int. Cl.: B01D 35/01, B01D 29/11, B01D 29/88, B01D 29/90

(54) **Apparatus for filtering of liquid**
Gerät zur Filtration von Flüssigkeit
Appareil de filtration de liquide

(30) Priority: 30.11.1990 SE 9003820
(43) Date of publication of application: 03.06.1992
(73) Proprietor: AKTIEBOLAGET ELECTROLUX, 105 45 Stockholm (SE)
(72) Inventor: Larsson, Karl Hakan, S-118 51 Stockholm (SE)
(74) Representative: Erixon, Bo

(56) References cited:
- EP-A- 0 235 857
- CH-A- 433 194
- DE-A- 3 412 217
- US-A- 4 778 595

## Description

The present invention relates to an apparatus for filtering of liquid, especially water, comprising a housing, a filter enclosed in said housing and extending vertically between horizontal end walls, a liquid inlet provided at the lower end of said housing, a filtrate outlet provided from the inside of said filter, a narrow passage provided between said filter and the inner vertical wall of said housing in which the liquid flows along said filter at high velocity, and a return conduit through which unfiltered liquid is returned to said inlet, said return conduit having an air inlet through which air is entered into the liquid and mixed therewith to form a pollution absorbing foam.

This type of apparatus is used for e.g. ultra filtration and reverse osmosis. Due to the high flow velocity across the filter rapid clogging of the filter is avoided and the intervals between filter cleaning backflush operations can consequently be prolonged. Another result of the high velocity is that only a minor portion of the liquid flow passes through the filter, and the remaining portion is preferably returned to the inlet.

The object of the invention is to provide an apparatus in which the cleaning of the filter has been improved in order to reduce the clogging to a further extent. This has been achieved by an apparatus of the kind mentioned in the introduction which according to the invention is characterized by a float controlled valve provided at the top of said housing and through which foam and pollutions are discharged from the apparatus through an outlet conduit connected to said float controlled valve.

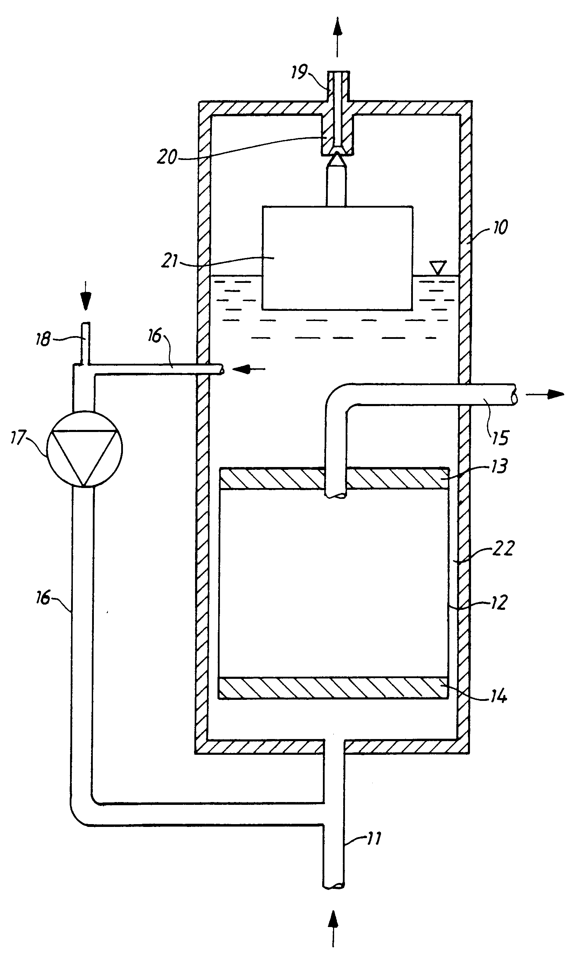

The invention will be described in more detail in the following with reference to the accompanying drawing which illustrates a diagrammatical longitudinal section of a preferred embodiment of the apparatus according to the invention.

As shown in the drawing, the filtering apparatus comprises a housing 10 which at its lower end has an inlet 11 for liquid to be filtered. The housing 10 encloses a filter 12 extending vertically between horisontal end walls 13, 14. The filter 12 is preferably circular cylindrical, as is the housing 10. The upper end wall 13 of the filter is provided with a filtrate outlet 15.

A return liquid conduit 16 is connected at one end to the housing 10 above the filter 12 and with its other end to the inlet 11. The return conduit 16 is provided with a pump 17 and an air inlet 18.

The housing 10 is provided at its upper end with a gas outlet 19 and a valve 20 which is controlled by a float 21 provided in the housing.

The liquid entering through inlet 11 is caused to flow through a narrow passage 22 between the filter 12 and the surrounding vertical wall of the housing 10. A small portion of this liquid flow passes through the filter and is discharged through the filtrate outlet 15. The remainder of the liquid flow is recirculated via return conduit 16 to the inlet 11. A high flow velocity is thereby maintained in the passage 22 which counteracts clogging of the filter 12. Air supplied via inlet 18 is mixed with the liquid to form bubbles and foam accompanying the recirculating liquid to inlet 11 and further through passage 22. The air bubbles ascend in the housing to be collected in the top portion thereof and are discharged from the apparatus via outlet 19. This outlet is controlled by the valve 20 actuated by a float 21 in order to maintain the liquid level in the housing generally constant.

Pollutions in the form of fine particles suspended in the liquid tend to be attracted to and attach to the air bubbles. As bubbles and foam are collected in the top portion of the housing and discharged through outlet 19 such pollutions will be entrained and removed from the apparatus. The addition of air also provides for cleaning of the liquid from gases dissolved therein, such as chlorine, methane, hydrogen sulphide, etc. Due to the fact that the liquid is recirculated a plurality of times while fresh air is continuously supplied through inlet 18, this cleaning process is made very effective. The air bubbles are of a size such as to be readily separated by the filter in order to flow along the same, and clogging of the filter is counteracted by simultaneous catching and entraining pollutions. The supply of air to the return conduit also results in precipitation of e.g. iron which is absorbed by the air bubbles and discharged through outlet 19.

## Claims

1. Apparatus for filtering of liquid, especially water, comprising a housing (10), a filter (12) enclosed in said housing and extending vertically between horizontal end walls (13, 14), a liquid inlet (11) provided at the lower end of said housing, a filtrate outlet (15) provided from the inside of said filter, a narrow passage (22) provided between said filter and the inner vertical wall of said housing in which the liquid flows along said filter at high velocity, and a return conduit (16) through which unfiltered liquid is returned to said inlet, said return conduit having an air inlet (18) through which air is entered into the liquid and mixed therewith to form a pollution absorbing foam, **characterized by** a float controlled valve (20, 21) provided at the top of said housing and through which foam and pollutions are discharged from the apparatus through an outlet conduit (19) connected to said float controlled valve.

## Patentansprüche

1. Vorrichtung zur Filtration von Flüssigkeit, insbesondere Wasser, umfassend ein Gehäuse (10), einen Filter (12), der in dem Gehäuse eingeschlossen ist und sich vertikal zwischen horizontalen Stirnwänden (13, 14) erstreckt, einen Flüssigkeitseinlaß (11) am unteren Ende des Gehäuses, einen Filtratauslaß (15), der von der Innenseite des Filters ausgeht, einen schmalen Kanal (22) zwischen dem Filter und der inneren vertikalen Wand des Gehäuses, in dem die Flüssigkeit mit hoher Geschwindigkeit an dem Filter entlangfließt, und eine Rückleitung (16), durch die unfiltrierte Flüssigkeit zu dem Einlaß zurückgeleitet wird, wobei die Rückleitung einen Lufteinlaß (18) aufweist, durch den Luft in die Flüssigkeit eingeleitet und damit vermischt wird, um einen Verunreinigungen aufsaugenden Schaum zu bilden, **gekennzeichnet durch** ein schwimmergesteuertes Ventil (20, 21), das am oberen Teil des Gehäuses vorgesehen ist, und durch das Schaum und Verunreinigungen aus der Vorrichtung durch eine Auslaßleitung (19) entfernt werden, die mit dem schwimmergesteuerten Ventil verbunden ist.

## Revendications

1. Appareil pour filtrer un liquide, notamment de l'eau, comprenant un carter (10), un filtre (12) logé dans ledit carter et s'étendant verticalement entre des parois d'extrémités horizontales (13, 14), une entrée de liquide (11) située à l'extrémité inférieure dudit carter, une sortie de filtrat (15) partant de l'intérieur dudit filtre, un passage étroit (22) situé entre ledit filtre et la paroi verticale interne dudit carter et dans lequel le liquide s'écoule à grande vitesse le long dudit filtre, et un conduit de retour (16) par lequel le liquide non filtré est ramené dans ladite entrée, ledit conduit de retour ayant un orifice d'admission d'air (18) par lequel de l'air est admis dans le liquide et mélangé à celui-ci pour former une mousse d'absorption de polluants, **caractérisé par** un clapet commandé par flotteur (20, 21) situé en haut dudit carter et par lequel la mousse et les polluants sont évacués de l'appareil par un conduit d'évacuation (19) relié audit clapet commandé par flotteur.
